# EUROPÄISCHE PATENTSCHRIFT

(11) **EP 1 035 365 B1**
(45) Veröffentlichungstag und Bekanntmachung des Hinweises auf die Patenterteilung: **22.10.2003**
(21) Anmeldenummer: 99104565.9
(22) Anmeldetag: 08.03.1999
(51) Int. Cl.: F16L 29/02

(54) **Universalanschluss**
Universal coupling
Accouplement universel

(43) Veröffentlichungstag der Anmeldung: 13.09.2000
(73) Patentinhaber: Leverberg, Siegfried, 46149 Oberhausen (DE)
(72) Erfinder: Leverberg, Siegfried, 46149 Oberhausen (DE)
(74) Vertreter: Linser, Heinz, Physiker

(56) Entgegenhaltungen:
- DE-A- 2 641 271
- GB-A- 2 019 533
- US-A- 2 524 052
- US-A- 4 253 488

## Beschreibung

Die Erfindung betrifft einen Universalanschluß zur Verbindung eines unter Druck stehenden Fluidsystems mit einer Nutzungseinrichtung, bestehend aus einem Ventil mit einem Ventilgehäuse, in dessen Bohrung ein selbstschließendes federbelastetes Rückschlagventil angeordnet ist und einem mit diesem verbindbaren Ventilöffner, wobei der in der Bohrung des Ventilgehäuses angeordnete federbelastete Ventilkörper des Rückschlagventils beim Einschrauben des Ventilöffners in das Ventilgehäuse durch dessen Anschlußdorn gegen den Federdruck axial in die Offenstellung des Ventils verschiebbar ist, und der Ventilöffner als Adapter mit einem Handrad mit Außengewinde und einer zentralen Bohrung zur drehbaren Aufnahme des Anschlußdorns ausgebildet ist, und das Ventilgehäuse eine Bohrung mit einem Innengewinde zur lösbaren Befestigung des Handrades aufweist.

Leitungen in Fluidsystemen haben die Aufgabe, unter Druck stehende Fluide, d.h. Gase oder Flüssigkeiten zu transportieren. Soll eine einwandfreie Funktion solcher Systeme gewährleistet sein, sind Kontrollen und Beeinflussungen der intern ablaufenden Vorgänge notwendig. Dies gilt beispielsweise auch für Leitungssysteme im gesamten Bereich versorgungstechnischer Anlagen. Auch aus Gründen der Energieersparnis und der Umweltbelastung ist man bestrebt, alle entsprechenden Einrichtungen optimal zu nutzen, d.h. mit einem möglichst hohen Wirkungsgrad zu betreiben. Dies setzt voraus, daß die verwendeten technischen Einrichtungen diesen Bedingungen genügen. Hinzu kommt, daß die Bedienung und Handhabung und damit auch die Wartung solcher Einrichtungen, insbesondere im Haushalt auch von technischen Laien sicher und einfach durchführbar sein muß.

Zur Inbetriebnahme versorgungstechnischer Fluidsysteme müssen diese eingestellt, kontrolliert und überwacht werden, d.h. die Systeme müssen in einfacher Weise entlüftet werden können und Drücke, Temperaturen und Volumenströme müssen leicht meßbar sein. Ein hierbei immer wieder auftretendes Problem besteht in der Adaption der unterschiedlichen Einrichtungen und Geräte wie z. B. Entlüftungsarmaturen, Manometer, Thermometer, Meßwertaufnehmer oder dergleichen.

Um einen nachträglichen Montageaufwand für die entsprechenden Anschlußstellen zu vermeiden, müssen diese bei der Planung und Montage von vornherein vorgesehen sein. Da die Anschlußstellen aber je nach Nutzung unterschiedliche Ausführungen aufweisen, muß frühzeitig die für die entsprechende Nutzung in Frage kommende Ausführung festgelegt werden. Dabei ist zu berücksichtigen, daß nach dem Stand der Technik für eine Anschlußstelle im wesentlichen jeweils nur eine Nutzungsart möglich ist, so daß damit eine Mehrfachnutzung ausgeschlossen ist. So lassen sich beispielsweise bei Entlüftungsanschlüssen von Heizkörpern in der Regel keine Meßeinrichtungen anschließen.

Bei Anschlüssen, die nur gelegentlich für eine Anlagenprüfung genutzt werden, ist zudem fast immer ein doppelter manueller Vorgang erforderlich, nämlich das Anbringen der Nutzungseinrichtung und das öffnen des Systems zur Nutzungseinrichtung. Beim Abbau der Nutzungseinrichtung schließt sich der Anschluß in der Regel nicht zwangsläufig, sondern muß ebenfalls durch einen separaten Betätigungsvorgang wieder geschlossen werden. Deswegen ist es nicht ausgechlossen, daß versehentlich und unerwünscht Fluide aus dem Leitungssystem nach außen gelangen. Dies ist eine besondere Gefahr, wenn es sich bei den Fluiden um Heißwasser oder brennbare Gase handelt.

Ventilkupplungen der eingangs aufgeführten Art dienen zum Beispiel zur Herstellung von Prüf- oder Meßanschlüssen an Druckleitungen, wobei in der Regel die Kupplungsbuchse mit Außengewinde fest an der Druckleitung eines zum Beispiel Hydraulik- oder Pneumatiksystems installiert ist. Für die Dauer der Prüf- oder Meßarbeiten wird auf diese Kupplungsbuchse ein als Hohlzapfen ausgebildeter Dichtnippel mittels Überwurfmutter aufgeschraubt, der fest mit einem Schlauch verbunden ist. Die Kupplungen können beispielsweise unter Druck, d.h. ohne die Anlage stillzusetzen, über Meßschläuche mit den entsprechenden Meßgeräten verbunden werden. Bei Anschluß fest installierter Geräte, zum Beispiel Manometer und Druckschalter können die flexiblen Meßschläuche ähnlich wie Elektrokabel verlegt werden, so daß eine aufwendige Rohrverlegung entfällt. Mit solchen Meßkupplungen lassen sich daher die effektiven Arbeitsdrücke direkt am Hydraulikgerät messen, wobei kein Lösen von Entlüftungsschrauben und Rohrverschraubungen erforderlich ist.

Solche Kupplungen finden bei den verschiedensten Bauelementen und Regelungen von Hydraulik- oder Pneumatiksystemen Verwendung. Nach dem Trennen des Kupplungsanschlusses der Nutzvorrichtung wird auf die Kupplungsbuchse mit Außengewinde eine Schutzkappe aufgeschraubt, die den Zweck hat, das Eindringen von Schmutz in die Kupplungsbuchse zu verhindern und welche darüberhinaus eine zusätzliche Abdichtungsfunktion für den Fall übernimmt, daß ein in die Kupplungsbuchse installiertes Rückschlagventil nicht absolut dicht schließt.

Für die Messung der Temperaturen eines fluidischen Mediums sind auch Meßkupplungen der o.g. Art bekannt, beispielsweise aus der DE-PS 33 41 860. Zuvor wurden die Temperaturen des fluidischen Mediums entweder mit fest installierten Temperaturfühlern, welche im Flüssigkeitsstrom des Systems liegen, gemessen oder es wurden hermetisch dichte Tauchrohre verwendet, in die Temperaturfühler eingebaut sind.

Aus der DE 26 41 271 A1 (1) ist eine Kupplung zum Herstellen eines Anschlusses an ein unter Druck stehendes System bekannt, welche aus einem Kupplungsstecker und aus einer diesen aufnehmenden Kupplungsbuchse besteht. Die Kupplungsbuchse befindet sich in einem Trägerteil, welches eine Aufnahmebohrung zur Aufnahme des Ventilgehäuses und des Kupplungssteckers aufweist. Ein Kupplungszapfen wird zum öffnen des Ventilkörpers durch die Bohrung eines Stützringes und eines Dichtringes geführt, während der Kupplungsstecker selbst mit einem Trägerteil verschraubt ist.

Den bekannten Systemen ist gemeinsam, daß die Dichtungen in der Bohrung der Kupplungsbuchse des Ventilgehäuses angeordnet sind. Hieraus resultieren mehrere Nachteile. So sind die Dichtungen in der Kupplungsbuchse nicht sichtbar oder einsehbar, so daß ihr Zustand nicht kontrolliert werden kann. Daraus ergibt sich die Gefahr, daß das Ventil ohne ein frühzeitiges Erkennen unbrauchbar werden kann. Eine Reparatur durch einen Dichtungsaustausch ist nicht möglich, so daß in den meisten Fällen das gesamte Ventil ausgetauscht werden muß, mit dem weiteren Nachteil der Druckabsenkung bzw. der Stillsetzung des gesamten Systems oder eines entsprechenden Teiles desselben.

Die US 2,524,052 A beschreibt zwar eine Kupplung zur Verbindung eines unter Druck stehenden Fluidsystems, in der eine Dichtring statt in der Kupplungsbuchse am Kupplungsstecker angeordnet ist. Allerdings ist der Kupplungsstecker über eine Überwurfmutter mit Innengewinde am Außengewinde der Kupplungsbuchse befestigt. Durch die Überwurfmutter wird ein Kontrollieren bzw. Austauschen des Dichtringes erschwert.

Der Erfindung liegt die Aufgabe zugrunde, diesen erheblichen Nachteil der bekannten Systeme zu vermeiden.

Eine weitere Aufgabe der Erfindung besteht darin, für ein Fluidsystem einen selbstschließenden Universalanschluß vorzuschlagen, mit dem sich die unterschiedlichsten Nutzungssysteme während des Betriebes des Fluidsystems in einfacher Weise auch von Nichtfachleuten druckdicht verbinden lassen, wobei der Anschluß bei Nichtgebrauch durch eine Schutzkappe abdichtend gesichert ist.

Die Lösung dieser Aufgabe besteht nach der Erfindung in einem Universalanschluß nach Anspruch 1.

Das Handrad ist gemäß der Erfindung durch einen Haltering in einer am Umfang des Anschlußdorns befindlichen Nut drehbar befestigt, wobei der Anschlußdorn mit dem Handrad den Ventilöffner bildet und die freie Länge des Anschlußdorns derartig dimensioniert ist, daß der öffnungsvorgang des Ventilkörpers beim Einführen des Anschlußdorns erst dann einleitbar ist, wenn sich die Dichtung des Anschlußdorns derartig in der Gleitstrecke der Bohrung des Ventilgehäuses befindet, daß das System nach außen hin gegen den Systemdruck mit Sicherheit vollständig abdichtet und aus dem System her gegenwirkende Kräfte bereits von entsprechenden Gewindegängen gehalten werden.

In Weiterbildung der Erfindung weist der Anschlußdorn an seinem äußeren Ende einen integrierten Sechskant mit einem Innengewinde zum Gegenhalten beim Anschluß von Nutzungseinrichtungen auf, der auch bei einem festgezogenen Handrad, d.h. bei einem voll geöffneten Ventil drehbar ist. Hierdurch ergibt sich der große Vorteil, daß beispielsweise bei dem Einsatz bzw. Anschluß von Meßgeräten bzw. Nutzungseinrichtungen diese in eine gewünschte Ableseposition gedreht werden können.

Zu jeder Zeit und insbesondere auch während des Betriebes des Systems ist eine Sichtänderung auf die Skala des Meßgerätes durchführbar. Der Öffnungs-, Drossel- und Schließvorgang des Ventilkörpers ist erfindungsgemäß durch den Schraubvorgang des Handrades mit seinem Außengewindeteil im Innengewinde des Ventilgehäuses bewirkbar, wobei die Drehbewegung des Handrades in eine axiale Bewegung des Anschlußdorns in einem definierten Verhältnis übersetzbar ist.

Nach der Erfindung ergibt sich die vorteilhafte Möglichkeit, das Ventil auch während des Betriebes des Fluidsystems zu öffnen und die Nutzeinrichtung ohne Beeinflussung des Systems anzuschließen.

Der Ventilöffnungsvorgang erfolgt jedoch erst dann, wenn das Innengewinde des Ventilkörpers die durch den höchsten zugelassenen Druck wirkende Gegenkraft mit einem zusätzlichen Sicherheitsfaktor aufnehmen kann.

Das Ventil ist bei Nichtgebrauch durch eine ein- oder mehrteilige Schutzkappe gesichert, welche einen Einschraubzapfen aufweist, der vorteilhaft ebenfalls einen Dichtkegel aufweist, so daß sich mit dem Konus im Ventilgehäuse eine Sekundärdichtung insbesondere für den Notfall ergibt.

Dieser Einschraubzapfen ist in vorteilhafter Weise mit einem Außengewinde im oberen Teil desselben versehen, so daß die Schutzkappe fest verschraubbar ist und eine sichere Sekundärdichtung bildet.

In Weiterbildung dieses Merkmals weist die Schutzkappe einen Sechskant zum Festziehen der zweiteiligen Schutzkappe auf, so daß eine einwandfreie Sicherung erfolgen kann.

Für die Schutzkappe bestehen zwei alternative Lösungen. So läßt sich die Schutzkappe mit dem Einschraubzapfen einteilig aus Kunststoff herstellen. Eine solche Schutzkappe läßt sich preiswert herstellen und kann bei ungefährlichen Stoffen im fluidischen System eingesetzt werden, wie beispielsweise bei mit Wasser gefüllten Heizkörpern.

Bei einer zweiten Lösungsform ist die Schutzkappe zweiteilig ausgebildet, wobei die Kappe aus Kunststoff oder Metall und der Einschraubzapfen aus Metall oder Keramik bestehen kann. Eine solche Schutzkappe bietet einmal eine Sekundärdichtung aber vor allem auch eine Notdichtung, die bei brennbaren Fluiden, wie beispielsweise brennbare Gase eingesetzt werden kann und welche auch dann noch dichtet, wenn der Ventilkörper des Universalanschlusses bereits funktionsunfähig geworden ist.

Der Ventilöffner ist direkt oder über einen Verbindungsschlauch mit der Nutzungseinrichtung verbindbar, so daß diese selbst auch entfernt angeordnet werden kann.

Der als Kegel oder Kugel ausgebildete Ventilkörper besteht aus Metall, er kann aber auch aus Gummi, Kunststoff oder Keramik bestehen.

Der als Kugel ausgebildete Ventilkörper ist nach der Erfindung gegen die Spiralfeder durch einen Federteller aus Metall, Keramik oder Kunststoff abgestützt, wobei der Federteller zur Zentrierung einen Zapfen aufweist und als Notabdichtung wirksam ist.

Der als Kegel ausgebildete Ventilkörper stützt sich direkt auf eine Feder ab und ist als Notabdichtung wirksam.

Die Erfindung wird anhand der Zeichnungen, in denen Ausführungsbeispiele der Erfindung dargestellt sind, näher erläutert. Hierbei zeigen:
- FIGUR 1a: einen Längsschnitt durch ein Ventilgehäuse eines Universalanschlusses nach der Erfindung mit einem kugelförmigen Ventilkörper, zum Einschrauben;
- FIGUR 1b: einen Längsschnitt durch ein Ventilgehäuse eines Universalanschlusses nach der Erfindung mit einem kegelförmigen Ventilkörper, zum Einschrauben;
- FIGUR 2: einen Längsschnitt durch ein Ventilgehäuse eines Universalanschlusses nach der Erfindung, zum Einpressen;
- FIGUR 3: Längsschnitte durch ein Ventilgehäuse eines Universalanschlusses nach der Erfindung mit wählbaren Anschlüssen a), b) und c);
- FIGUR 4: einen Längsschnitt durch einen Ventilöffner für alle Universalanschlüsse nach der Erfindung, zum Einschrauben;
- FIGUR 5: Längsschnitte durch drei Schutzkappen für Universalanschlüsse;
a: zweiteilig, mit einem Dicht- und Einschraubzapfen aus Metall oder Keramik, mit Haltelasche;
b1: einteilig, vollständig aus Kunststoff mit integriertem Einschraubzapfen aus Kunststoff, mit Haltelasche;
b2: einteilig, vollständig aus Kunststoff mit integriertem Einschraubzapfen aus Kunststoff, ohne Haltelasche;

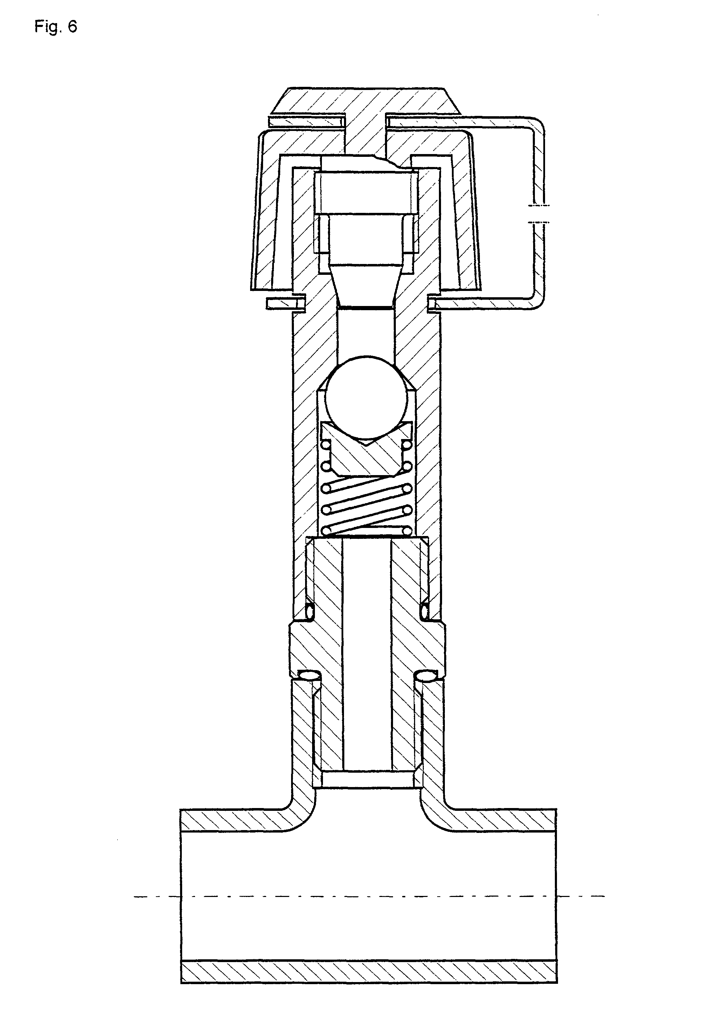

- FIGUR 6: einen Längsschnitt durch einen Universalanschluß nach der Erfindung mit einem wählbaren Anschluß und einer aufgeschraubten einteiligen Schutzkappe mit Haltelasche;

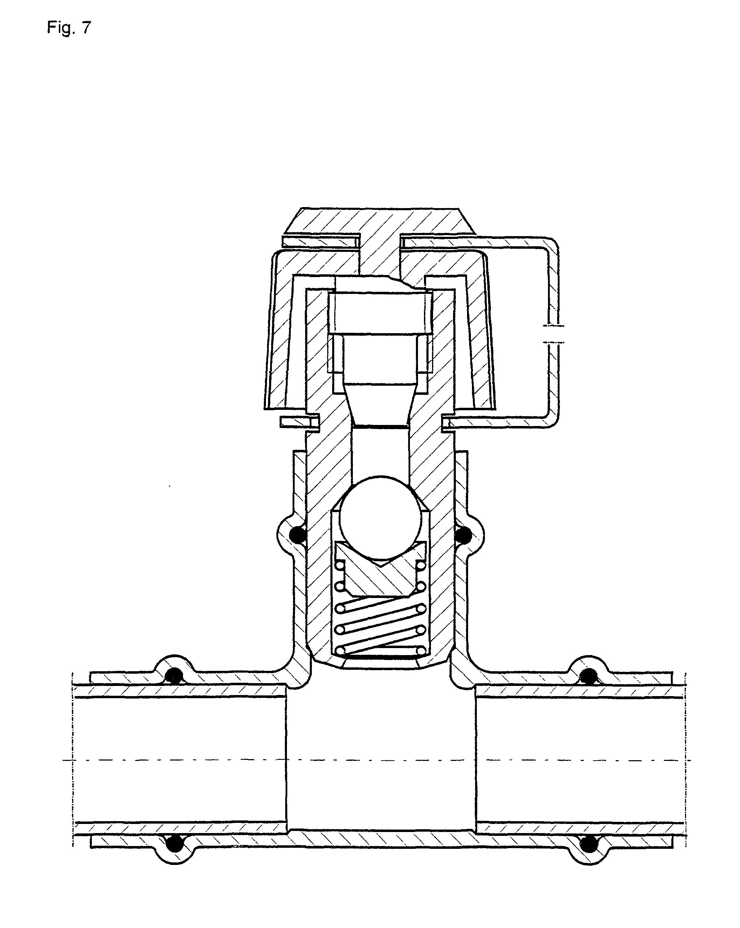

- FIGUR 7: einen Längsschnitt durch einen in ein Rohrsystem eingepreßten Universalanschluß mit aufgeschraubter einteiliger Schutzkappe;

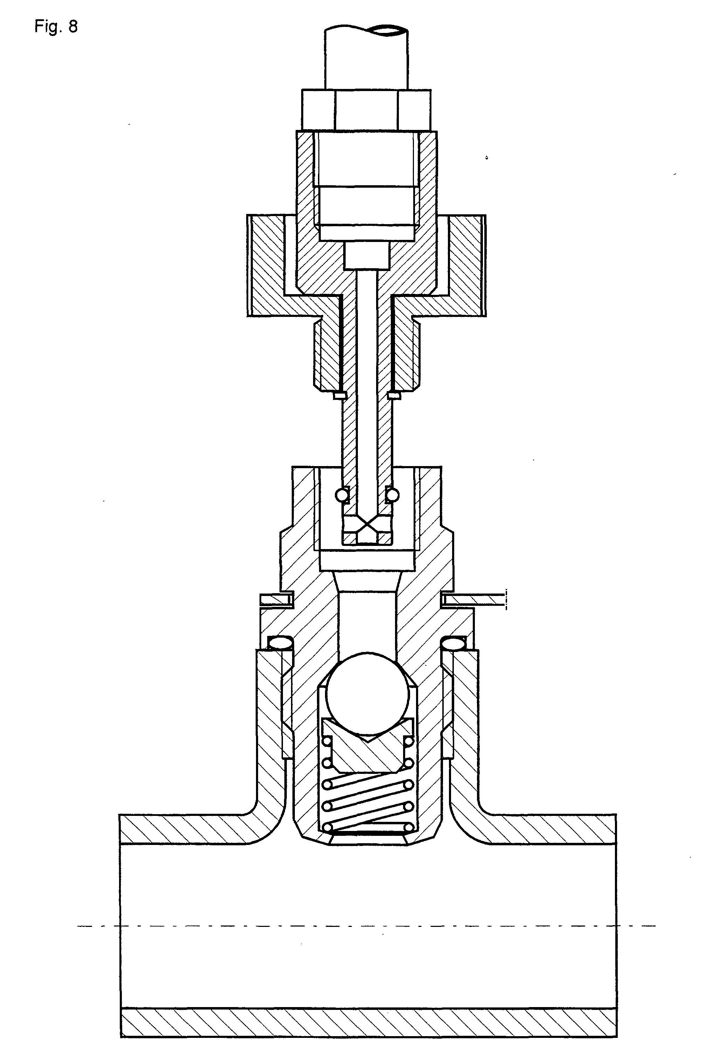

- FIGUR 8: einen Längsschnitt durch ein Ventilgehäuse eines mit einem Rohrsystem verschraubten Universalanschlusses, in der Einführungsphase des Ventilöffners;

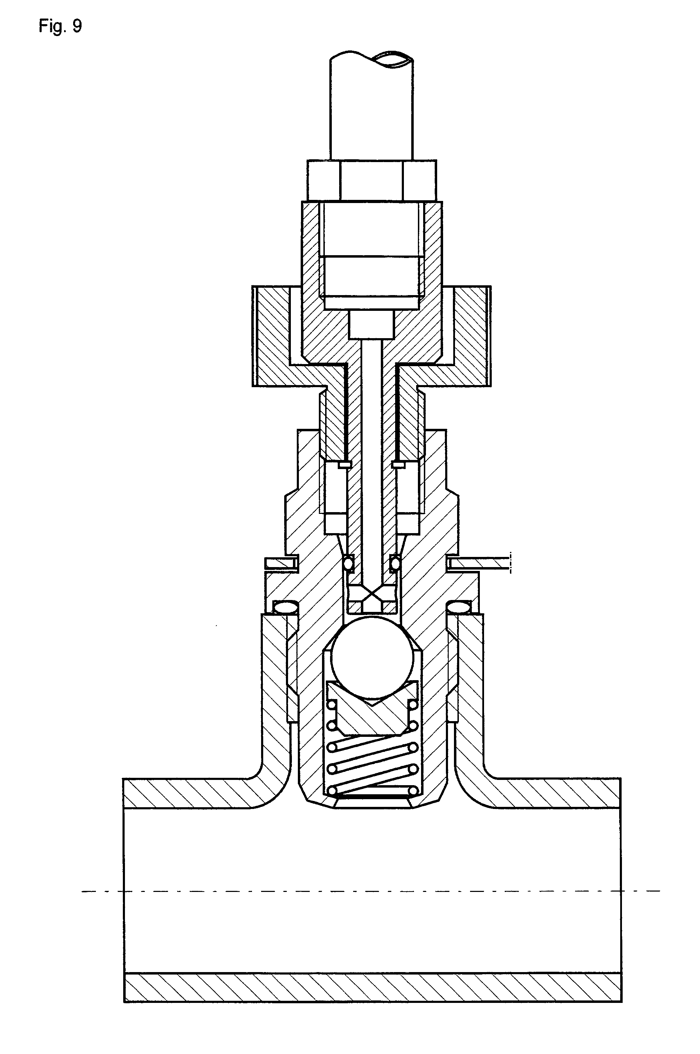

- FIGUR 9: einen Längsschnitt durch ein Ventilgehäuse eines mit einem Rohrsystem verschraubten Universalanschlusses nach Figur 8, in der Einführungsphase des Ventilöffners kurz vor der Öffnung des Ventilkörpers;

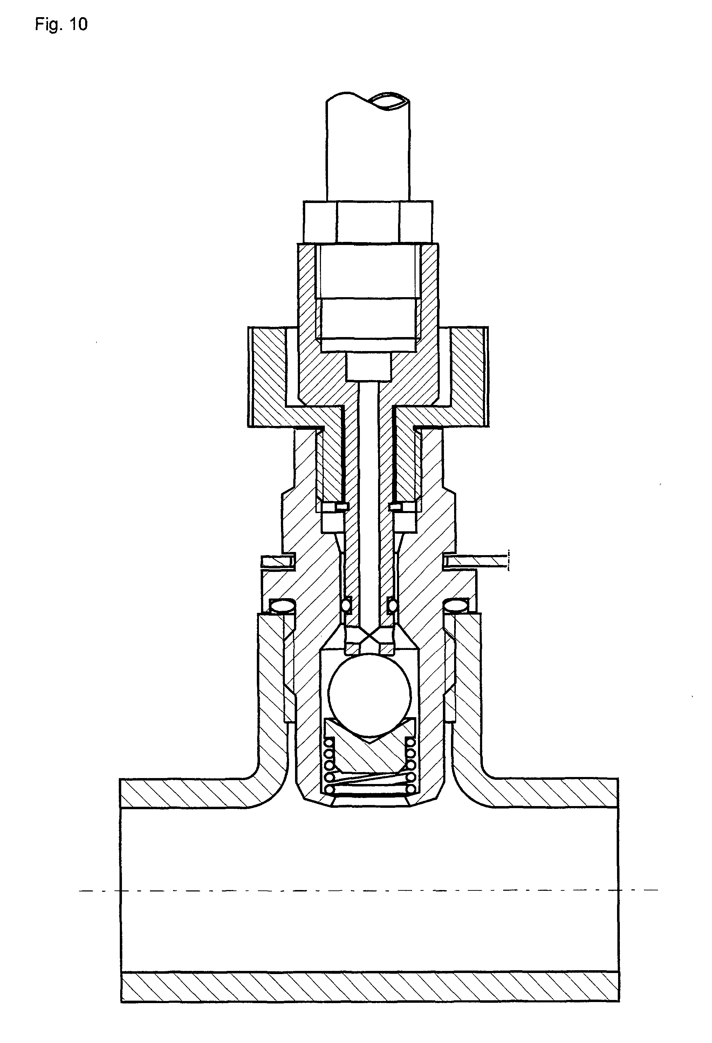

- FIGUR 10.: einen Längsschnitt durch ein Ventilgehäuse eines mit einem Rohrsystem verschraubten Universal anschlusses nach Figur 8 oder 9, in der geöffneten Phase des Ventilkörpers;

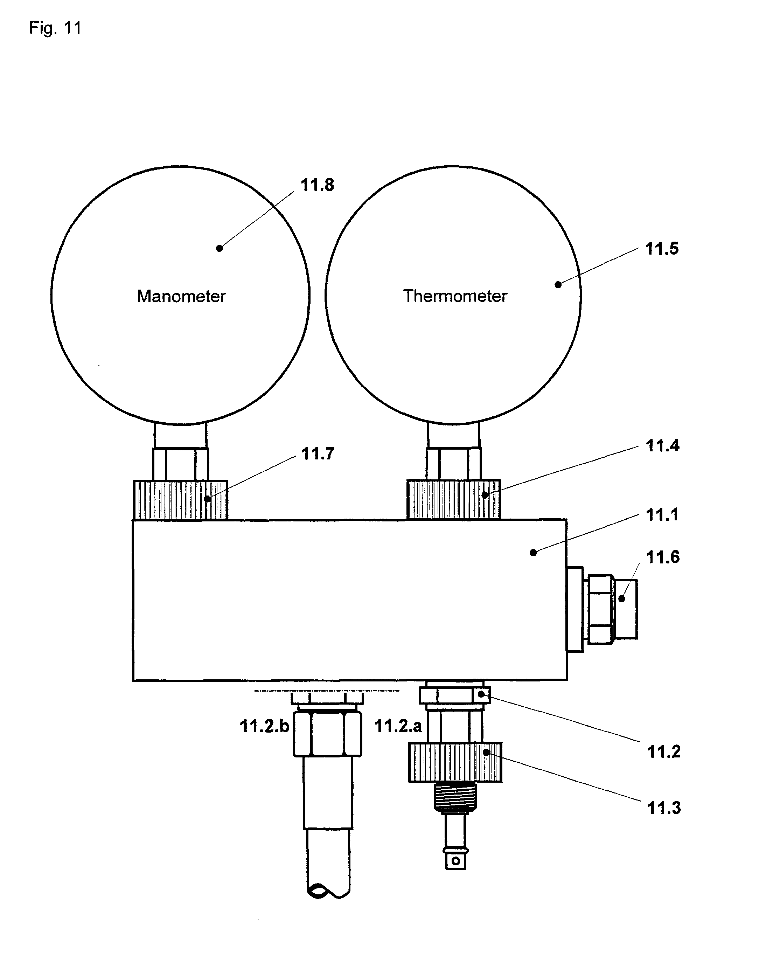

- FIGUR 11.: eine schematische Ansicht eines Meßverteilers mit zwei angeschlossenen Nutzungseinrichtungen;

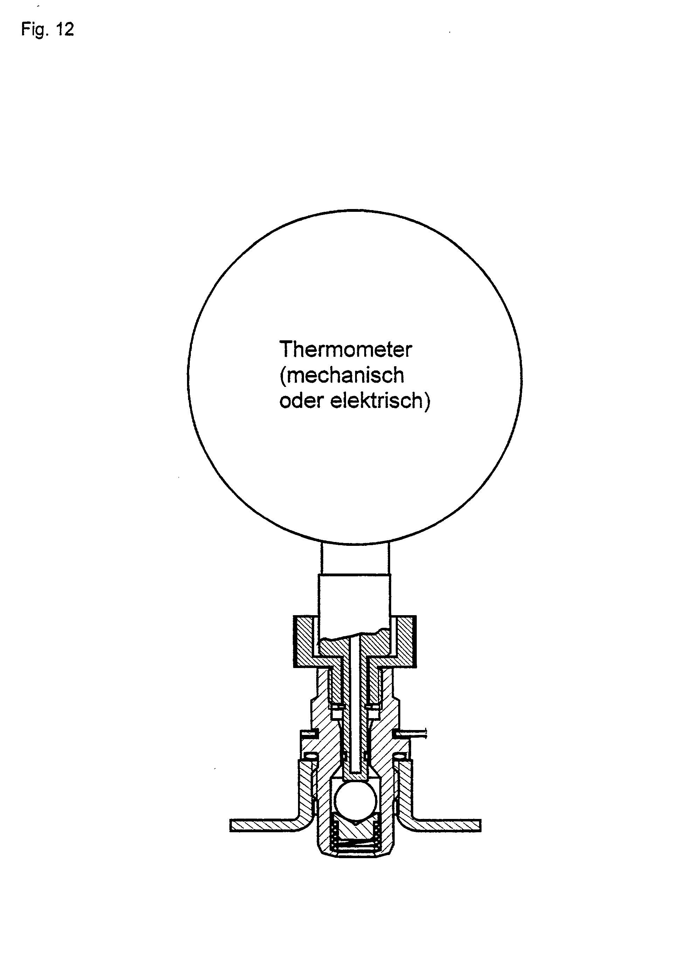

- FIGUR 12.: eine schematische Ansicht eines Universalanschlusses mit einer Nutzungseinrichtung z. B. mechanisches Thermometer;

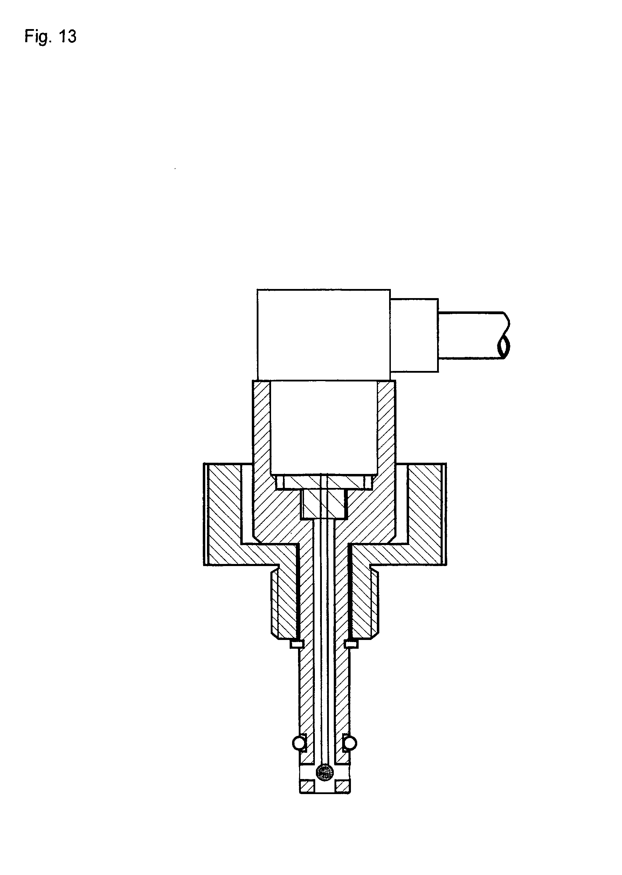

- FIGUR 13.: eine schematische Ansicht eines Ventilöffners z. B. mit einem elektrischen Temperaturfühler, und

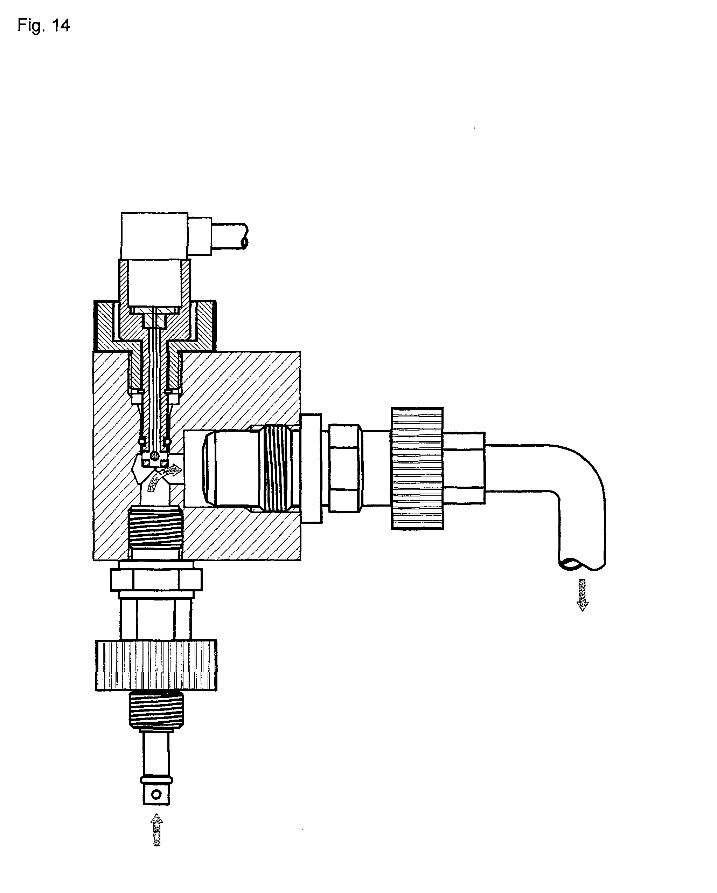

- FIGUR 14.: eine schematische Ansicht eines Meßverteilers, einfach, mit Nutzungseinrichtung z. B. als elektrischer Temperaturfühler.

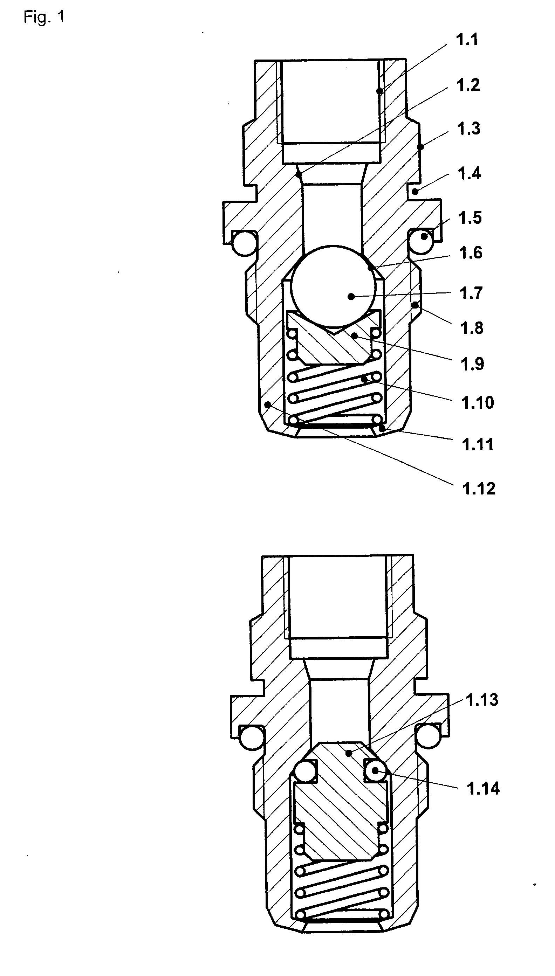

Die Figur 1a zeigt einen Längsschnitt durch ein Ventilgehäuse 1.12 eines Universalanschlusses nach der Erfindung zur Aufnahme eines kugelförmigen Ventilkörpers 1.7 und eines Federtellers 1.9 zum Abstützen des Ventilkörpers 1.7 gegen die Spiralfeder 1.10. Zur Aufnahme einer Schutzkappe im Falle der Nichtbenutzung oder zum Einschrauben eines Ventilöffners ist das Einschraubgewinde als ein Innengewinde 1.1 ausgebildet. Hierdurch ist das Gewinde besonders geschützt. Dies ist besonders von Vorteil, da in den meisten Anwendungsfällen die Umgebung des Universalanschlusses nicht gegen Verschmutzung gesichert ist. Für eine zusätzliche Abdichtung bei Verwendung einer Schutzkappe, welche später noch näher beschrieben wird, ist ein Innenkonus 1.2 vorgesehen, welcher auch der leichten Einführung des Ventilöffners mit seiner außen liegenden Dichtung dient.

Im oberen Bereich des Ventilgehäuses 1.12 ist ein genormter Sechskant 1.3 vorgesehen, so daß sich das Ventilgehäuse 1.12 leicht handhaben und in eine Gewindebohrung eines nicht dargestellten Rohres eines Fluidsystems einschrauben läßt.

Zur Befestigung einer Haltelasche der Schutzkappe ist eine um den Umfang des Ventilgehäuses 1.12 geführte Nut 1.4 vorgesehen. Damit wird die Schutzkappe unverlierbar. Für die Abdichtung des Universalanschlusses nach außen ist eine elastische Dichtung 1.5 vorgesehen, welche in einer Nut gelagert ist.

Die vorliegende Ausführungsform des Universalanschlusses weist ein Außengewinde 1.8 zur Herstellung einer Schraubverbindung mit einem Rohrende eines Fluidsystems auf. Der Gewindeanschluß ist vorteilhaft nach DIN 3852-T11 hergestellt, so daß beispielsweise ein einfacher Austausch von Entlüftungsventilen bei Heizkörpern oder dergleichen möglich ist.

Bei der vorliegenden Ausführungsform der Erfindung ist der Ventilkörper 1.7 als eine Kugel aus Gummi ausgebildet. Der Ventilkörper 1.7 kann aber auch aus Kunststoff, Keramik oder Metall bestehen. Für die Abdichtung am Ventilkörper 1.7 ist das Ventilgehäuse 1.12 mit einer kegelig angedrehten Dichtfläche 1.6 vorgesehen.

Der Ventilkörper 1.7 ist gegen die Spiralfeder durch einen Federteller 1.9 aus Metall, Keramik oder Kunststoff abgestützt, wobei der Federteller 1.9 zur Zentrierung einen Zapfen aufweist. Zum Andrücken des Ventiltellers 1.9 dient die vorzugsweise aus Edelstahl bestehende Feder 1.10. Die Feder ihrerseits erhält nach der Montage eine sichere Gegenhalterung in Form einer Bördelung 1.11.

Die Figur 1b zeigt ein Ventilgehäuse 1.12, welches dem Ventilgehäuse nach Figur 1a voll entspricht. Anstelle eines kugelförmigen Ventilkörpers 1.7 mit seinem Federteller 1.9 ist jedoch ein kegelförmiger Ventilkörper 1.13 vorgesehen, der in seinem unteren Teil als Federteller ausgebildet ist. Seine Kegelfläche ist der Dichtfläche 1.6 des Ventilgehäuses 1.12 angepaßt, wobei im unteren Bereich des Kegelmantels eine Ringnut zur Aufnahme eines Dichtringes 1.14 eingelassen ist.

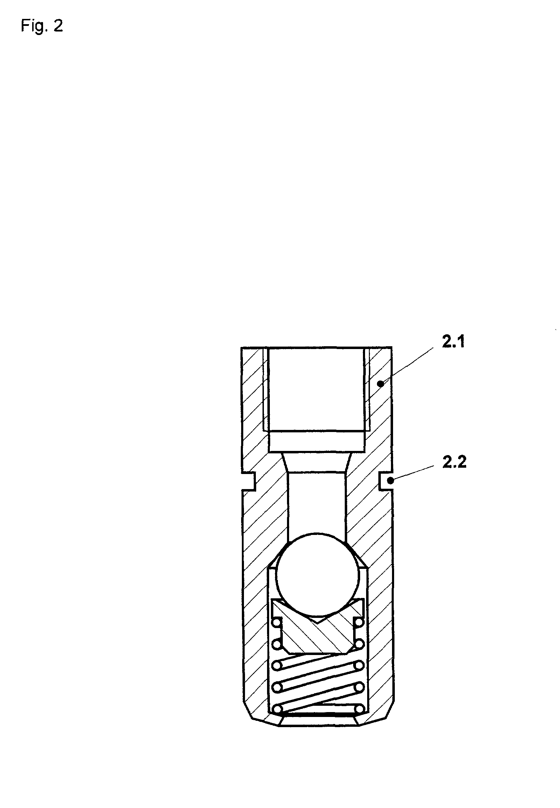

In der Figur 2 ist eine Variante eines Universalanschlusses dargestellt, bei der der innere Aufbau des Ventilgehäuses 2.1 der Ausführungsform nach den Figur 1a und 1b voll entspricht, wobei jedoch das Ventilgehäuse 2.1 mit einer glatten zylindrischen Außenfläche versehen ist, so daß das Ventilgehäuse 2.1 in ein genormtes Rohrleitungsende einpreßbar ist, wie es anhand der Figur 7 dargestellt ist. Der Einpreßvorgang erfolgt mit einem dafür vorgesehenen Spezialwerkzeug. Eine Nut 2.2, welche der Nut 1.4 nach den Figuren 1a und 1b entspricht, und die ebenfalls um den Umfang des Ventilgehäuses 2.1 geführt ist, dient gleichfalls zur Aufnahme der Haltelasche einer Schutzkappe, wie sie später beschrieben wird. Mit dieser Ausführungsform ist man erstmalig in der Lage, im Bereich der Versorgungstechnik ein komplettes Ventil ohne Übergangsarmaturen direkt in die Rohrleitung eines Fluidsystems einpressen zu können.

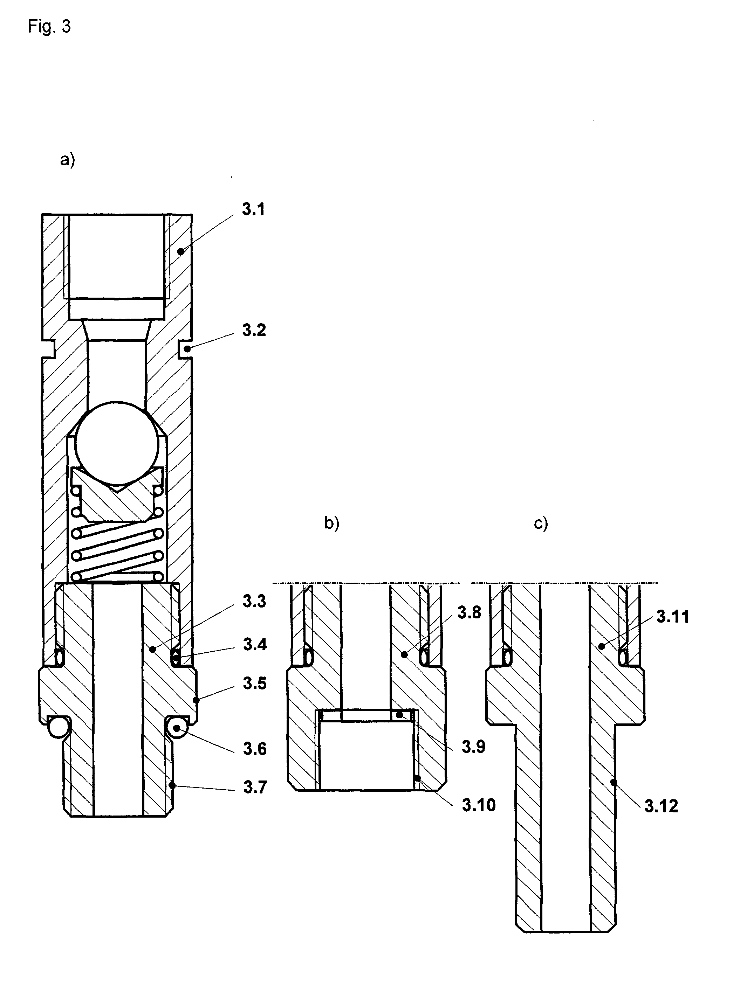

Die Figur 3a zeigt einen Universalanschluß in abgewandelter Form nach Figur 2. Das Ventilgehäuse 3.1 weist rohrsystemseitig ein Innengewinde zur Aufnahme eines Anschlußstückes 3.3 auf, wobei das Anschlußstück 3.3 an einem Ende passend zum Innengewinde des Ventilgehäuses 3.1 mit einem Außengewinde und am anderen Ende je nach Einsatz und Anwendung mit einem Außengewinde 3.7 versehen ist. Die Nut 3.2 dient zur Befestigung der Haltelasche einer Schutzkappe. Zwischen dem Ventilgehäuse 3.1 und dem Anschlußstück 3.3 ist eine Dichtung 3.4 angeordnet, beispielsweise ein O-Ring. Ein entsprechendes Dichtungselement 3.6 befindet sich am Ende des Außengewindes 3.7 des Anschlußstückes 3.3. Mit 3.5 ist ein Sechskant zur Handhabung des Anschlußstückes 3.3 bezeichnet.

Das Anschlußstück 3.8 nach Figur 3b ist mit einem Innengewinde 3.10 versehen, an dessen Ende eine Abdichtung 3.9 angeordnet ist.

Das Anschlußstück 3.11 nach Figur 3c weist an seinem unteren Teil einen glatten Zylinder 3.12 auf, welcher in ein Rohrende einpreßbar ist. Die Anschlußstücke 3.3, 3.8 und 3.11 bilden daher jeweils einen Adapter, um den Ventilkörper universell einsetzen zu können.

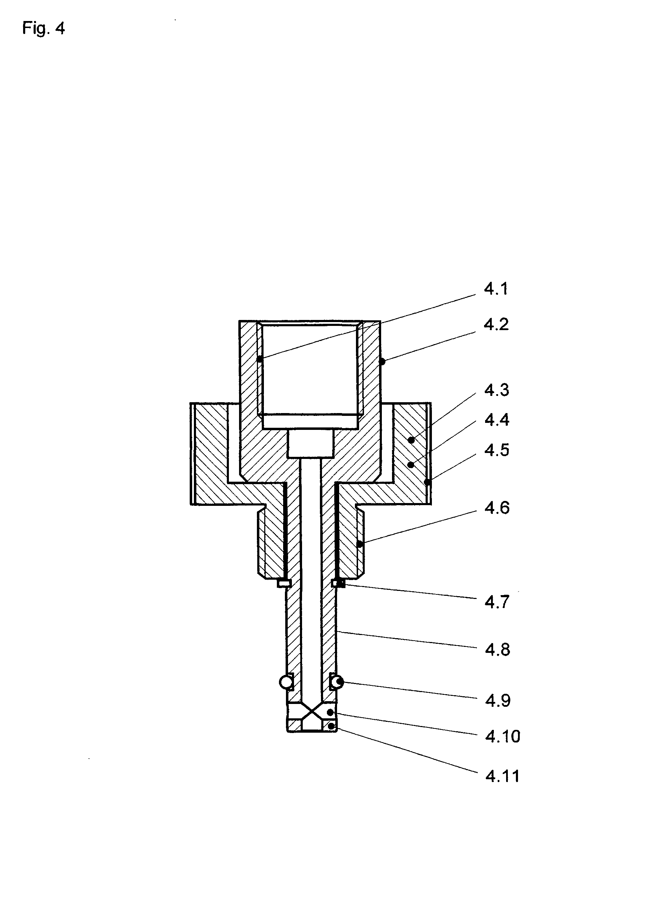

Die Figur 4 zeigt einen Längsschnitt durch einen Ventilöffner für den Universalanschluß nach den Figuren 1, 2 und 3. Dieser Ventilöffner eignet sich für alle Ausführungsformen des Universalanschlusses. Ein wesentliches Element des Ventilöffners ist der Anschlußdorn 4.8, welcher durch die Bohrung eines Handrades 4.4 drehbar geführt ist. Der Anschlußdorn 4.8 weist an seinem oberen Ende eine Schlüsselfläche 4.2 auf, die z. B. als Sechskant ausgebildet sein kann. Seine Innenbohrung ist mit einem Anschlußgewinde 4.1 versehen, welches das Anschließen von Nutzeinrichtungen an den Universalanschluß für die verschiedensten Aufgaben und Zwecke erlaubt, wie unten näher ausgeführt wird. Am Umfang des Anschlußdorns ist eine Nut 4.7 zur Aufnahme eines Halteringes, beispielsweise eines Sprengrings vorhanden. Eine weitere Nut im unteren Bereich des Anschlußdorns dient zur Aufnahme einer leicht auswechselbaren und sichtbaren elastischen Dichtung 4.9. Für den freien Durchgang des Fluids sorgt ein Querkanal 4.10 am Dornkopf 4.11, da die Öffnung des Längskanals beim Öffnungsvorgang auf den Ventilkörper 1.7 drückt und sich damit selbst verschließt. Das Handrad 4.4 ist zur bequemeren Handhabung mit einer Riffelung 4.5 versehen, und zur Einschraubbefestigung des Ventilöffners in das Ventilgehäuse 1.12 des Universalanschlusses dient das Gewinde 4.6, welches in das Innengewinde 1.1 des Ventilgehäuses eingreift.

Der Aufbau dieses Ventilöffners zeigt eine Reihe von Vorteilen, auf die im folgenden unabhängig von der jeweiligen Rangfolge ihrer Bedeutung eingegangen wird. Die axiale Verschiebung des Anschlußdorns 4.8 im Ventilgehäuse 1.12 zur Öffnung des Ventilkörpers 1.7 bzw. 1.13 erfolgt allein durch die Betätigung des Handrades 4.4 über das Gewinde 4.6 im Zusammenwirken mit dem Innenwinde 1.1 des Ventilgehäuses 1.12. Der öffnungsvorgang kann in jeder öffnungsphase verbleiben, so daß dadurch eine sehr genaue Drosselung möglich ist. Unabhängig von der axialen Verschiebung des Anschlußdorns 4.8 ist in jeder Ventil-Öffnungsposition eine Drehbewegung des Anschlußdorns 4.8 gegeben. Diese Möglichkeit bietet für sich mehrere Vorteile. Ist beispielsweise mit dem Gewinde 4.1 ein Schlauchanschluß verbunden, so wird dieser beim Schließ- und öffnungsvorgang nicht verdrillt, sondern verbleibt in seiner ursprünglichen Lage. Dies vereinfacht den Anschluß weiterer und vielfältiger Nutzungseinrichtungen für die verschiedensten Aufgaben, da auch diese ihre definierte Position beibehalten können. Es ergeben sich so Anschlußmöglichkeiten für die Entlüftung fluidischer Anlagen, beispielsweise Heizungsanlagen, für Druckentlastungen, Probeentnahmen, Befüllung, Dichtigkeitsüberprüfungen, mechanische oder elektrische Druckmessungen, mechanische oder elektrische Temperaturmessungen und mechanische oder elektrische Volumenstrommessungen.

Bei der unmittelbaren Verbindung von Anzeigeinstrumenten mit dem Ventilöffner kann das Anzeigefeld der Instrumente zu jeder Zeit des Schließ- und Öffnungszustandes und damit auch während des gesamten Betriebes in jede Richtung um 360° geschwenkt werden, so daß eine optimale Ablesbarkeit zu jeder Zeit, d.h. auch während des Betriebes unter Systemdruck herstellbar ist. Dies ist von großer Bedeutung insbesondere dann, wenn nur ein geringer Raum für die Montage und Ablesung vorhanden ist. Damit lassen sich Rohrverlegungen mit ihren Anschlüssen zur Durchführung von Messungen oder Kontrollen optimaler durchführen, da die ablesbare Positionierung von Meßgeräten nunmehr unbeachtlich ist und auch während des Betriebes noch geändert werden kann. Denkt man hierbei nur an einen gewöhnlichen Heizungskeller nach dem Stand der Technik, so kann man feststellen, daß die Skalen der verschiedenen Anzeigeinstrumente in alle möglichen Richtungen zeigen, unabhängig vom Lichteinfall oder der Ablesbarkeit.

Bei unmittelbarer Verbindung von Anzeigeinstrumenten mit dem Ventilöffner kann eine einfache Funktionsüberprüfung der fest installierten Meßeinrichtung durch abschrauben und testen erfolgen.

Ein sehr wesentlicher Vorteil des Ventilöffners nach der Erfindung ist die Anordnung der Dichtung 4.9 auf dem Anschlußdorn. Beim aufgeführten Stand der Technik befindet sich die entsprechende Dichtung oder die Dichtungen im oberen Teil der Bohrung des Ventilkörpers, d.h. innen im Körper eines Anschlusses. Dort sind sie nicht sichtbar, so daß auch ihr jeweiliger Zustand nicht kontrolliert werden kann. Ein rechtzeitiger Austausch der Dichtungen ist somit nicht möglich. Auch ist ein erheblicher Aufwand erforderlich, um an die Dichtungen im Ventilkörper zu gelangen, so daß im Schadensfall der gesamte Ventilkörper ausgetauscht werden muß, mit dem Nachteil der Druckabsenkung des Systems oder eines Teiles des Systems.

Wird ein Schaden an der Dichtung nur durch die Undichtigkeit des Systems erkannt, können erhebliche Sekundärschäden auftreten, die in keiner Relation zum Wert einer Dichtung stehen. Beim Stand der Technik versucht man die Dichtungen so zu kammern, daß sie beim Einführen eines Anschlußdorns relativ geschützt sind. Diese Möglichkeit ist jedoch sehr begrenzt, wenn die Dichtfunktion voll erhalten bleiben soll.

Die Erfindung geht hier einen anderen Weg und ordnet die Dichtung 4.9 auf dem Anschlußdorn 4.8 an, so daß sie bei jedem Öffnungs- und Schließvorgang sichtbar ist und daher kontrolliert werden kann, ohne das fluidische System abzuschalten. Damit ist ein leichter Zugang zum Austausch der Dichtung gegeben, der von jedem Laien durchgeführt werden kann. Außerdem befindet sich in der Bohrung des Ventilkörpers ein Konus 1.2, welcher die Einführung des Anschlußdorns 4.8 erheblich erleichtert, so daß die Verletzungsgefahr der Dichtung 4.9 auf ein Minimum reduziert ist.

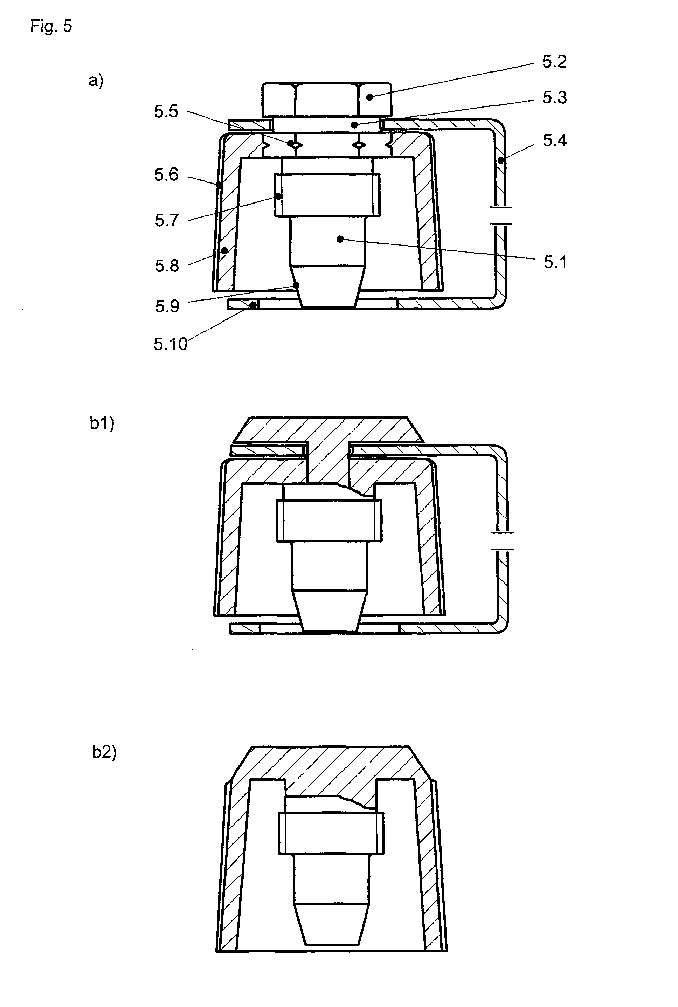

Ist am Universalanschluß keine Nutzungseinrichtung angeschlossen, so wird das Ventilgehäuse mit einer Schutz- oder Schraubkappe versehen. Eine solche Schutzkappe ist in den Figuren 5a, b1 und b2 in drei Ausführungsformen dargestellt. In Figur 5a ist eine zweiteilige Ausführungsform wiedergegeben, bei der die Kappe 5.8 aus Kunststoff oder Metall und der Einschraubzapfen 5.1 aus Metall oder Keramik hergestellt sein kann. Der Dicht- und Einschraubzapfen 5.1 ist mit einem Konus 5.9 ausgerüstet, welcher dem Konus 1.2 in der Bohrung des Ventilgehäuses 1.12 angepaßt ist, so daß im verschraubten Zustand eine zusätzliche Dichtung und im Notfall eine Notabdichtung gebildet wird, z. B. im Katastrophenfall bei Brand. In diesem Fall kann der Ventilkörper (Kugel aus Gummi oder Kunststoff oder die Dichtung am Kegel) eventuell zerstört werden. Die konische Abdichtung, Metall auf Metall, welche hohen Temperaturen standhält, verhindert das Austreten brennbarer Gase. Zur Herstellung der Schraubbefestigung ist der Einschraubzapfen 5.1 mit einem Gewinde 5.7 versehen. Zum Festziehen des Einschraubzapfens 5.1 und damit der Schutzkappe dient ein Sechskant 5.2 unterhalb dessen eine Nut 5.3 zur Befestigung der Haltelasche 5.4 vorgesehen ist. An ihrem anderen Ende ist die Lasche 5.4 mit einem Befestigungselement 5.10 versehen, welches eine ringförmige Formgebung aufweist, so daß eine Befestigung mit der Nut 1.4 am Ventilgehäuse 1.12 erfolgen kann. Zur Erleichterung der Handhabung der Schutzkappe ist an der Kappe 5.8 eine Riffelung 5.6 vorgesehen. Zur Herstellung einer Verbindung zwischen dem Zapfen 5.1 und der Kappe 5.8 ist der Teil des Einschraubzapfens, der mit der Kappe verbunden ist, als Sechskant 5.5 ausgeführt, um das Drehmoment zu übertragen, welches beim Aufschrauben der Schutzkappe entsteht.

Die Ausführungsform nach Figur 5b1 zeigt eine einteilige Ausführung mit Haltelasche 5.4, ähnlich wie in Figur 5a dargestellt ist, welche jedoch vollständig aus Kunststoff besteht. Der Konus am Einschraubzapfen, welcher in der zweiteiligen Ausführung vorzugsweise aus Metall oder Keramik besteht, übernimmt die wichtige Aufgabe der zusätzlichen zweiten, nicht zerstörbaren Abdichtung (Sekundär- und Notabdichtung) falls die Primärdichtung unwirksam werden sollte.

Die Figur 5b2 zeigt eine Ausführungsform ähnlich derjenigen nach Figur 5b1, jedoch ohne Haltelasche 5.4.

Zur weiteren Veranschaulichung der Erfindung zeigt die Figur 6 einen Universalanschluß im Längsschnitt mit einem Ventilgehäuse und einem wählbaren Anschluß oder Adapter zur Verschraubung mit einem Rohrstutzen eines Fluidsystems. Das Ventilgehäuse ist durch eine Schutzkappe abgesichert. Der Zapfen in der Schutzkappe ist mit einem Konus versehen (wie anhand der Figuren 5a bereits beschrieben wurde) und bildet mit dem Konus in der Bohrung des Ventilgehäuses eine Sekundärdichtung und zusätzlich eine Notdichtung. Da alle Elemente in den Figuren 1 bis 5 bereits separat beschrieben wurden, wird hier auf eine Bezifferung der einzelnen Elemente verzichtet.

In ähnlicher Weise wie Figur 6 zeigt die Figur 7 einen Universalanschluß zum Einpressen in einen Rohrstutzen eines Fluidsystems. Das Ventilgehäuse ist durch eine Schutzkappe gesichert, so daß ebenfalls eine Sekundär- oder Notdichtung vorhanden ist. Die Ausführungsform des Universalanschlusses zum Einpressen in einen Rohrstutzen ist eine besonders montagefreundliche Lösung, da die Herstellung der Preßverbindung mit einer Spezialzange erfolgt, wodurch eine sichere Montage in wenigen Sekunden ohne Spezialkenntnis des Monteurs durchgeführt werden kann. Ein langwieriger Lötvorgang, welcher nur von Spezialisten sicher durchgeführt werden kann, oder eine Adaption durch zusätzliche Gewindeadapter, erübrigt sich. Außerdem läßt sich der Montagevorgang auch in beengten Räumen durchführen, beispielsweise durch eine Rohrverlegung mit minimalem Abstand von Wänden. Hier wirkt sich auch die vorteilhafte Ausführung des Ventilöffners nach der Erfindung besonders aus, dessen Ventilöffner auch bei geöffnetem Ventilkörper um 360° drehbar ist, so daß jede Position der Skala eines Meßgerätes eingestellt werden kann.

Die Figuren 8, 9 und 10 zeigen den gleichen Aufbau eines Universalanschlusses mit Nutzeinrichtung, jedoch in unterschiedlichen Öffnungsphasen. Das Ventilgehäuse weist ein Außengewinde auf und ist mit einem Rohrstutzen eines fluidischen Rohrsystems verbunden. Der Ventilöffner ist mit einer Nutzungseinrichtung verbunden. Dies kann beispielsweise zum Entlüften des Systems ein Schlauch sein, der mit einem nicht näher dargestellten Gefäß verbunden ist. Wie der Figur 8 zu entnehmen ist, ist die Schutzkappe bereits entfernt, welche mittels ihrer Sicherungslasche am Ventilgehäuse hängt und der Ventilöffner wird in die Bohrung des Ventilgehäuses eingeführt. Hierbei passiert die Dichtung des Ventilöffners den Konus in der Bohrung des Ventilgehäuses und erfährt dort eine zunehmende Pressung, bevor der Kopf des Ventilöffners den Ventilkörper erreicht. Diese Ventilöffnungsphase ist der Figur 9 zu entnehmen. Das Handrad des Ventilöffners hat bereits einige Gewindegänge des Innengewindes des Ventilgehäuses erfaßt, noch bevor der Ventilöffner den Ventilkörper erreicht hat. Diese erfaßte Anzahl der Gewindegänge ist so dimensioniert, daß sie der beim öffnen des Ventilkörpers durch den Druck im System verursachten Gegenkraft mit einem Sicherheitsfaktor standhalten und das Handrad eine ausreichend große Drehung bezogen auf die Ventilöffnung durchführt, so daß ein gut steuerbarer Drosselvorgang erreicht wird. Der Beginn des Ventilöffnungsvorganges ist für die Bedienungsperson leicht spürbar, da nunmehr der Ventilkörper gegen die Kraft der Ventilfeder bewegt werden muß, jedoch ist die aufzubringende Ventilöffnungskraft nur derartig, daß der öffnungsvorgang wegen der Gewindeübersetzung sehr leicht von Hand durchgeführt werden kann. Da in der gesamten Ventilöffnungsphase das System nach außen vollständig und ausreichend abgedichtet ist, ist der öffnungszustand einstellbar und der auftretende Volumenstrom begrenz- bzw. drosselbar.

Die Figur 11 zeigt ein Anwendungsbeispiel der Erfindung unter Verwendung eines speziellen, der Erfindung angepaßten Meßverteilers 11.1. Der Meßverteiler 11.1 ist für ein- oder mehrere Meßeinrichtungen wie beispielsweise ein Thermometer 11.5 und ein Manometer 11.8, ausgerüstet, welche mit einem Entlüftungsoder Befüllungsanschluß 11.6 kombiniert sind, so daß beim Entlüften oder Befüllen eine direkte Beobachtung der Meßwerte möglich ist. Die Meßgeräte 11.5 und 11.8 sind jeweils mit einem Ventilöffner 11.4 bzw. 11.7 angeschlossen. Das Anschlußstück 11.2 dient zum Anschluß eines Ventilöffners 11.2a mit Hilfe des Handrades 11.3 und das Anschlußstück 11.2b zum Anschluß eines Verbindungsschlauchs.

Die Figur 12 zeigt einen Universalanschluß mit einer z. B. als mechanisches oder elektrisches Thermometer ausgebildeten Nutzungseinrichtung. Der Ventilöffner ist hierbei mit einer axialen Kapillar-Bohrung versehen, welche ventilseitig geschlossen ist und einen elektrischen Sensor oder ein Mittel aufweist, welches bei Temperaturänderung einer ausreichenden Volumenänderung unterworfen ist, wie beispielsweise Quecksilber oder Alkohol. Für die Temperaturmessung wird der Ventilkörper geöffnet, so daß das Fluid den unteren Teil der Kapillarbohrung immer umspült und seine Temperatur dem elektrischen Sensor oder dem Mittel in der Kapillarbohrung überträgt, dessen Volumenänderung an einer Skala als Temperaturänderung dargestellt wird.

Die Figur 13 zeigt einen Ventilöffner für einen Universalanschluß nach der Erfindung mit einem elektrischen Temperaturfühler, der im Bereich der Radialbohrung des Ventilöffners angeordnet ist. Die elektrisch leitende Verbindung des Temperaturfühlers ist durch die Bohrung zum nicht näher dargestellten Meßwerk geführt. Zur Messung der Temperatur kann der Ventilöffner in das Ventilgehäuse des Universalanschlusses eingeführt werden und bei Öffnung des Ventils kommt das Fluid in Kontakt mit dem Temperaturfühler.

Die Figur 14 zeigt eine Weiterentwicklung dieser Temperaturmeßmethode. Hierbei wird der Ventilöffner nach Figur 13 einem Meßverteiler zugeführt, welcher derartig augebildet ist, daß im montierten Zustand der Temperaturfühler im Flüssigkeitsstrom liegt, so daß die Temperatur noch exakter bestimmt werden kann. Der Meßverteiler ist mit Hilfe eines Ventilöffners mit einem nicht näher dargestellten Universalanschluß mit einem fluidischen System verbunden, dessen Temperatur zu überwachen ist.

Diese Anwendungsbeispiele veranschaulichen die große Vielfalt, welche sich durch die Anwendung des Universalanschlusses ergibt. Der Meßverteiler erlaubt die Kombination aller einsetzbaren Meßgeräte und sein Anschluß kann direkt mit einem fluidischen System oder auch über eine Schlauchverbindung erfolgen.

Während beispielsweise die bei einem Heizungssystem nach dem Stand der Technik vorhandenen Entlüftungsventile nur für diesen Zweck in umständlicher Weise geeignet sind, lassen sich mit dem Universalanschluß alle erforderlichen Maßnahmen, wie Entlüften, Befüllen, Dichtigkeitsüberprüfungen und Messen durchführen. Jedem Besitzer einer Zentralheizungsanlage sind die Probleme bekannt, welche allein beim Entlüften vorliegen. So lassen sich an die bekannten Entlüftungsventile nicht einmal Schlauchverbindungen zum einwandfreien Auffangen der Flüssigkeit aus den Anlagen anschließen. Mit einem Dreikantoder Vierkantschlüssel im Miniformat müssen diese Ventile geöffnet werden und eine Drosselung ist kaum möglich und in vielen Fällen gelangt die aus der Heizungsanlage bei der Entlüftung aufzufangende verschmutzte und geruchsaktive Flüssigkeit auf den Boden oder die Tapeten.

Ventilkörper können komplett herausgeschraubt werden. Dies kann zu einer erheblichen Verschmutzung des Umfeldes führen, weil der Ventilkörper nur sehr schwierig gegen den austretenden Wasserstrahl wieder einzuschrauben ist.

Allein schon diese bekannten Nachteile des Standes der Technik, welche bei einer Heizungsanlage auftreten, werden mit der Erfindung vollständig beseitigt. Eine Umrüstung der bekannten Ventile, insbesondere bei Heizugsanlagen ist völlig unproblematisch und die Benutzung des Universalanschlusses für die genannten Wartungsarbeiten kann von jedem technischen Laien einwandfrei durchgeführt werden.

| BEZUGSZEICHENLISTE | |
|---|---|
| Figur 1 | |
| Innengewinde | 1.1 |
| Innenkonus | 1.2 |
| Sechskant | 1.3 |
| Nut | 1.4 |
| Dichtung | 1.5 |
| Dichtfläche | 1.6 |
| Ventilkörpers | 1.7 |
| Außengewinde | 1.8 |
| Federteller | 1.9 |
| Spiralfeder | 1.10 |
| Bördelung | 1.11 |
| Ventilgehäuse | 1.12 |

| Figur 1b | |
|---|---|
| Dichtkopf | 1.13 |
| Dichtring | 1.14 |

| Figur 2 | |
|---|---|
| Ventilgehäuse | 2.1 |
| Nut | 2.2 |

| Figur 3a, b, c | |
|---|---|
| Ventilgehäuses | 3.1 |
| Nut | 3.2 |
| Anschlußstück | 3.3 |
| Dichtung | 3.4 |
| Sechskant | 3.5 |
| Dichtung | 3.6 |
| Außengewinde | 3.7 |
| Anschlußstück | 3.8 |
| Abdichtung | 3.9 |
| Innengewinde | 3.10 |
| Anschlußstück | 3.11 |
| Zylinder | 3.12 |

| Figur 4 | |
|---|---|
| Anschlußgewinde | 4.1 |
| Schlüsselfläche | 4.2 |
| Positionierung | 4.3 |
| Handrades | 4.4 |
| Riffelung | 4.5 |
| Gewinde | 4.6 |
| Nut | 4.7 |
| Anschlußdorn | 4.8 |
| Dichtung | 4.9 |
| Querkanal | 4.10 |
| Dornkopf | 4.11 |

| Figur 5 | |
|---|---|
| Einschraubzapfen | 5.1 |
| Sechskant | 5.2 |
| Nut für Haltelasche | 5.3 |
| Haltelasche | 5.4 |
| Sechskant | 5.5 |
| Riffelung | 5.6 |
| Gewinde | 5.7 |
| Kappe | 5.8 |
| Konus | 5.9 |
| Befestigungselement | 5.10 |

| Figur 11 | |
|---|---|
| Meßverteiler | 11.1 |
| Anschlußstück | 11.2 |
| Ventilöffner | 11.2a |
| Anschlußstück | 11.2b |
| Handrad | 11.3 |
| Ventilöffner | 11.4 |
| Termometer | 11.5 |
| Befüllungs- | |
| Entlüftungsschlauch | 11.6 |
| Ventilöffner | 11.7 |
| Manometer | 11.8 |

## Patentansprüche

1. Universalanschluß zur Verbindung eines unter Druck stehenden Fluidsystems, welches auch für brennbare Gase und brennbare Flüssigkeiten verwendbar ist, mit Nutzungseinrichtungen zur Messung des Druckes und/oder der Temperatur, bestehend aus einem Ventil mit einem Ventilgehäuse (1.12), in dessen Bohrung ein selbstschließendes federbelastetes Rückschlagventil (1.7;1.13) angeordnet ist und einem mit diesem verbindbaren Ventilöffner, wobei der in der Bohrung des Ventilgehäuses angeordnete federbelastete Ventilkörper des Rückschlagventils beim Einschrauben des Ventilöffners (11.4) durch dessen Anschlußdorn (4.8) gegen den Federdruck axial in die Offenstellung des Ventils verschiebbar ist, und der Ventilöffner (11.4) als Adapter mit einem Handrad (4.4) mit Außengewinde (4.6) und einer zentralen Bohrung zur drehbaren Aufnahme des Anschlußdorns (4.8) ausgebildet ist, das Ventilgehäuse (1.12) eine Bohrung mit einem Innengewinde (1.1) zur lösbaren Befestigung des Handrades (4.4), mit einer sich anschließenden Gleitstrecke für den Anschlußdorn (4.8) des Ventilöffners aufweist, und der Anschlußdorn (4.8) mit einer zentralen Bohrung mit zentralen und/oder radialen Öffnungskanälen (4.10) in seinem Kopfteil (4.11) und eine an seiner Außenfläche zum Zwecke des Auswechselns zugänglich angeordnete Dichtung (4.9) versehen ist, welche mit der Gleitstrecke des Ventilgehäuses (1.12) dichtend zusammenwirkt, wobei die Strecke vom Beginn des Ventilöffnungsvorgangs bis zur vollen Öffnung des Ventilkörpers (1.7) so dimensioniert ist, dass eine einstellbare Drosselung des durchfließenden Volumenstromes gegeben ist und der Eingangsbereich der Gleitstrecke im Ventilgehäuse (1.12) im Anschluss an das Innengewinde (1.1) des Ventilgehäuses (1.12) eine Fläche für eine Sekundärabdichtung in Form eines Konus (1.2) aufweist.

2. Universalanschluß nach Anspruch 1, **dadurch gekennzeichnet, dass** das Handrad (4.4) durch einen Haltering (4.7) in einer am Umfang des Anschlußdorns (4.8) befindlichen Nut drehbar befestigt ist, wobei der Anschlußdorn (4.8) mit dem Handrad (4.4) den Ventilöffner bilden und die freie Länge des An schlußdorns (4.8) derartig dimensioniert ist, dass der Öffnungsvorgang des Ventilkörpers (1.7) beim Einführen des Anschlußdorns (4.8) erst dann einleitbar ist, wenn sich die Dichtung (4-.-9) des An- schlußdorns (4.8) derartig in der Gleitstrecke der Bohrung des Ventilgehäuses befindet, dass das System nach außen hin gegen den Systemdruck mit einem Sichereitsfaktor vollständig abdichtet und das aus dem System her gegenwirkende Kräfte bereits von entsprechenden Gewindegängen gehalten werden.

3. Universalanschluß nach Anspruch 1 oder 2, **dadurch gekennzeichnet, daß** der Anschlußdorn (4.8) an seinem äußeren Ende einen integrierten Sechskant (4.2) mit einem Innengewinde (4.1) zum Gegenhalten beim Anschluß von Nutzungseinrichtungen aufweist, der auch bei einem festgezogenen Handrad und damit einem geöffneten Ventilkörper (1.7) drehbar ist, so daß eine Nutzungseinrichtung in die gewünschte Ableseposition gedreht werden kann.

4. Universalanschluß nach einem der voranstehenden Ansprüche, **dadurch gekennzeichnet, dass** der Öffnungs-, Drossel- und Schließvorgang des Ventilkörpers (1.7) durch den Schraub vorgang des Handrades (4.4) mit seinem Außengewindeteil (4.6) im Innengewinde (1.1) des Ventilgehäuses bewirkbar ist, wobei die Drehbewegung des Handrades (4.4) in eine axiale Bewegung des Anschlußdorns (4.8) in einem definierten Verhältnis über setzbar ist.

5. Universalanschluß nach einem der voranstehenden Ansprüche **dadurch gekennzeichnet, daß** die Strecke vom Beginn des Ventilöffnungsvorganges bis zur vollen Öffnung des Ventilkörpers (1.7) so dimensioniert ist, daß eine einstellbare Drosselung des durchfließenden Volumenstromes gegeben ist.

6. Universalanschluß nach einem der voranstehenden Ansprüche, **dadurch gekennzeichnet, daß** der Eingangsbereich der Bohrung im Ventilgehäuse (1.12) im Anschluß an das Innengewinde (1.1) des Ventilgehäuses (1.12) als Sekundärabdichtung in Form eines Konus (1.2) ausgebildet ist, die in Verbindung mit einer Schutz kappe wirksam wird.

7. Universalanschluß nach einem der voranstehenden Ansprüche, **dadurch gekennzeichnet, daß** dasVentil bei Nichtgebrauch durch eine ein- oder mehrteilige Schutzkappe gesichert ist, welche einen Einschraubzapfen (5.1) mit Dichtkegel (5.9) aufweist.

8. Universalanschluß nach Anspruch 7, **dadurch gekennzeichnet, daß** die zweiteilige Schutzkappe einen Einschraubzapfen (5.1) aus Metall oder Keramik aufweist.

9. Universalanschluß nach Anspruch 7, **dadurch gekennzeichnet, daß** die Schutzkappe mit Einschraubzapfen einteilig ausgebildet ist und vollständig aus Kunststoff besteht.

10. Universalanschluß nach Anspruch 7, **dadurch gekennzeichnet, daß** die Schutzkappe einen Einschraubzapfen (5.1) mit geschütz tem Außengewinde (5.7) aufweist.

11. Universalanschluß nach Anspruch 7, **dadurch gekennzeichnet, daß** die Schutzkappe einen Sechskant (5.2) zum Festziehen derselben Z.B. als Kindersicherung aufweist.

12. Universalanschluß nach einem der voranstehenden Ansprüche, **dadurch gekennzeichnet, daß** der Ventilöffner direkt oder über einen Verbindungsschlauch mit einer Nutzungseinrichtung verbindbar ist.

13. Universalanschluß nach einem der voranstehenden Ansprüche, **dadurch gekennzeichnet, daß** der als Kugel oder Kegel ausgebildete Ventilkörper (1.7) aus Gummi, Kunststoff oder Keramik besteht.

14. Universalanschluß nach einem der voranstehenden Ansprüche, **dadurch gekennzeichnet, daß** der Ventilkörper (1.7) gegen die Spiralfeder (1.10) durch einen Federteller (1.9) aus Metall, Keramik oder Kunststoff abgestützt ist, wobei der Federteller (1.9) zur Zentrierung einen Zapfen aufweist und als Notabdichtung wirksam ist.

15. Universalanschluß nach einem der voranstehenden Ansprüche, **dadurch gekennzeichnet, daß** das Ventilgehäuse (2.1) als ein in genormte Rohrleitungsenden einpreßbarer Kreiszylinderkörper ausgebildet ist.

16. Universalanschluß nach einem der Ansprüche 1-14, **dadurch gekennzeichnet, daß** das Ventilgehäuse (3.1) rohrsystemseitig ein Innengewinde zur Aufnahme eines Anschlußstückes aufweist, wobei das Anschlußstück an einem Ende ein Außengewinde und am anderen Ende ein Innengewinde, ein Außengewinde oder einen in ein Rohrende einpreßbaren Kreiszylindermantel aufweist.

17. Universalanschluß nach einem der voranstehenden Ansprüche, **dadurch gekennzeichnet, daß** der Ventilöffner in der Bohrung des Anschlussdorns einen Temperatursensor aufweist.

18. Universalanschluß nach einem der voranstehenden Ansprüche, **dadurch gekennzeichnet, daß** der Ventilöffner mit z. B. mechanischen, elektrischen oder anderen Nutzungseinrichtungen verbunden ist.

## Claims

1. Universal connection for connecting a pressurised fluid system which can also be used for flammable gases and flammable liquids, with functional devices for measuring the pressure and/or the temperature, consisting of a valve with a valve housing (1.12) in the bore of which a self-closing, spring-loaded non-return valve (1,7; 1.13) is arranged and with a valve opener which can be connected to this, where the spring-loaded body of the non-return valve arranged in the bore of the valve housing can, when the valve opener (11.4) is screwed in, be displaced axially against spring pressure into the open position of the valve by its connecting shaft (4.8), and the valve opener (11.4) is designed as an adapter with a handwheel (4.4) with an external thread (4.6) and a central bore for rotatable location of the connecting shaft (4.8), the valve housing (1.12) incorporates a bore with an internal thread (1.1) for detachable fastening of the handwheel (4.4), with a following slideway for the connecting shaft (4.8) of the valve opener, and the connecting shaft (4.8) is provided with a central bore with central and/or radial opening channels (4.10) in its tip portion (4.11) and a seal (4.9) arranged on its outer surface so as to be accessible for the purpose of replacement, which seal acts as a seal in combination with the slideway of the valve housing (1.12), where the distance from the start of the valve opening operation to the point where the valve body (1.7) is fully opened is dimensioned to enable the volume of material flowing through it to be regulated and the inlet area of the slideway in the valve housing (1.12) following the internal thread (1.1) of the valve housing (1.12) incorporates a surface for a secondary seal in the form of a bevel (1.2).

2. Universal connection in accordance with claim 1, **characterised in that** the handwheel (4.4) is rotatably fastened by a retaining ring (4.7) in a groove around the circumference of the connecting shaft (4.8), where the connecting shaft (4.8) with the handwheel (4.4) forms the valve opener and the free length of the connecting shaft (4.8) is so dimensioned that, when the connecting shaft (4.8) is inserted, opening of the valve body (1.7) cannot begin until the seal (4.9) of the connecting shaft (4.8) is so located in the slideway of the bore of the valve housing that the system is completely sealed to the outside against system pressure with a safety factor and that counteracting forces from the system are absorbed by adequate thread turns.

3. Universal connection in accordance with claim 1 or 2, **characterised in that** the connecting shaft (4.8) incorporates at its outer end an integrated hexagonal member (4.2) with an internal thread (4.1) to act as a steady when connecting functional devices, which hexagonal member is rotatable, even with a fully tightened handwheel and thus an opened valve body, (1.7) such that a functional device can be turned to the desired reading position.

4. Universal connection in accordance with one of the foregoing claims, **characterised in that** the opening, regulating and closing operation of the valve body (1.7) can be actuated by the screwing action of the handwheel (4.4) with its outer threaded portion (4.6) in the internal thread (1.1) of the valve housing, where the rotating movement of the handwheel (4.4) can be translated into an axial movement of the connecting shaft (4.8) in a specified ratio.

5. Universal connection in accordance with one of the foregoing claims, **characterised in that** the distance from the start of the valve opening operation to the point at which the valve body (1.7) is fully opened is so dimensioned as to enable the volume of material flowing through it to be regulated.

6. Universal connection in accordance with one of the foregoing claims, **characterised in that** the inlet area of the bore in the valve housing (1.12) following the internal thread (1.1) of the valve housing (1.12) is designed as a secondary seal in the form of a bevel (1.2), which seal acts in combination with a protective cap.

7. Universal connection in accordance with one of the foregoing claims, **characterised in that** the valve, when not in use, is secured with a one- or multi-piece protective cap, which incorporates a screwed plug (5.1) with a sealing bevel (5.9).

8. Universal connection in accordance with claim 7, **characterised in that** the two-piece protective cap incorporates a screwed plug (5.1) of metal or ceramic material.

9. Universal connection in accordance with claim 7, **characterised in that** the protective cap is designed as a single piece with a screwed plug and is made entirely of plastic.

10. Universal connection in accordance with claim 7, **characterised in that** the protective cap incorporates a screwed plug (5.1) with a protected external thread (5.7).

11. Universal connection in accordance with claim 7, **characterised in that** the protective cap incorporates a hexagonal member (5.2) for fastening the cap, e.g. for child protection.

12. Universal connection in accordance with one of the foregoing claims, **characterised in that** the valve opener can be connected to a functional device either direct or via a connecting hose.

13. Universal claim in accordance with one of the foregoing claims **characterised in that** the valve body (1.7) designed as a ball or a cone is made of rubber, plastic or ceramic material.

14. Universal connection in accordance with one of the foregoing claims, **characterised in that** the valve body (1.7) is braced against the spiral spring (1.10) by a cup spring (1.9) of metal, ceramic material or plastic, where the cup spring (1.9) incorporates a centring piece and acts as an emergency seal.

15. Universal connection in accordance with one of the foregoing claims, **characterised in that** the valve housing (2.1) is designed as a circular cylinder body which can be pressed into standardised pipe ends.

16. Universal connection in accordance with one of claims 1 - 14, **characterised in that** the valve housing (3.1) incorporates on the pipe system side an internal thread to receive a connecting piece, where the connecting piece incorporates at one end an external thread and at the other end an internal thread, an external thread or a circular cylinder jacket which can be pressed into a pipe end.

17. Universal connection in accordance with one of the foregoing claims, **characterised in that** the valve opener incorporates a temperature sensor in the bore of the connecting shaft.

18. Universal connection in accordance with one of the foregoing claims, **characterised in that** the valve opener is connected to e.g. mechanical, electrical or other functional devices.

## Revendications

1. Raccord universel pour le raccordement d'un système de fluide sous pression, utilisable aussi pour des gaz combustibles et des liquides combustibles, comportant des dispositifs d'utilisation pour la mesure de la pression et/ou de la température, comprenant une soupape avec un boîtier de soupape (1.12), dans l'alésage duquel sont agencés une soupape de retenue chargée par ressort, à fermeture automatique (1.7 ; 1.13) et un dispositif d'ouverture de soupape pouvant être relié à celle-ci, le corps de la soupape chargée par ressort agencé dans l'alésage du boîtier de soupape pouvant être déplacé lors du vissage du dispositif d'ouverture de la soupape (11.4) par l'intermédiaire du mandrin de raccordement correspondant (4.8), contre la pression de ressort et de manière axiale dans la position d'ouverture de la soupape, le dispositif d'ouverture de la soupape (11.4) étant constitué par un adaptateur comportant un volant (4.4) avec un filetage extérieur (4.6) et un alésage central destiné à recevoir par rotation le mandrin de raccordement (4.8), le boitier de la soupape (1.12) comportant un alésage avec un filetage intérieur (1.1) destiné à la fixation amovible du volant (4.4), et comportant une section de glissement raccordée pour le mandrin de raccordement (4.8) du dispositif d'ouverture de la soupape, le mandrin de raccordement (4.8) comportant un alésage central avec des canaux d'ouverture centraux et/ou radiaux (4.10) dans sa partie de tête (4.11) et un joint (4.9) agencé sur sa surface externe en un point accessible en vue d'un remplacement, coopérant de manière étanche avec la section de glissement du boîtier de la soupape (1.12), la section étant dimensionnée, du début du processus d'ouverture de la soupape jusqu'à l'ouverture complète du corps de la soupape (1.7), de sorte à établir un étranglement réglable du débit volumétrique la traversant, la région d'entrée de la section de glissement dans le boitier de la soupape (1.12) comportant, derrière le filetage intérieur (1.1) du boîtier de la soupape (1.12), une surface détanchéité secondaire sous forme d'un cône (1.2).

2. Raccord universel selon la revendication 1.**caractérisé en ce que** le volant (4.4) est fixé par rotation par l'intermédiaire d'une bague de retenue (4.7) dans une rainure agencée sur la circonférence du mandrin de raccordement (4.8), le mandrin de raccordement (4.8) constituant avec le volant (4.4) le dispositif d'ouverture de la soupape, la longueur libre du mandrin de raccordement (4.8) étant telle que le processus d'ouverture du corps de la soupape (1.7), lors de l'insertion du mandrin de raccordement (4.8), ne peut commencer que si le joint (4.9) du mandrin de raccordement (4.8) est agencé dans la section de glissement de l'alésage du boitier de la soupape, de sorte que l'étanchéité complète du système est établie vers l'extérieur contre la pression de système par un facteur de sécurité, des forces opposées du système étant déjà retenues par des pas de vis correspondants.

3. Raccord universel selon les revendications 1 ou 2.**caractérisé en ce que** le mandrin de raccordement (4.8) comporte au niveau de son extrémité externe un hexagone intégré (4.2) comportant un filetage intérieur (4.1) pour assurer la retenue lors du raccordement de dispositifs d'utilisation, pouvant être tourné aussi lors du serrage du volant et de l'ouverture du corps de la soupape (1.7), un dispositif d'utilisation pouvant ainsi être tourné dans la position de lecture voulue.

4. Raccord universel selon l'une des revendications précédentes, **caractérisé en ce que** les processus d'ouverture, d'étranglement et de fermeture du corps de la soupape (1.7) peuvent être entraînées par le procédé de vissage du volant (4.4), sa partie de filetage extérieur (4.6) étant engagée dans le filetage intérieur (1.1) du boîtier de la soupape, le déplacement par rotation du volant (4.4) pouvant ainsi être converti en un déplacement axial du mandrin de raccordement (4.8), dans le cadre d'un rapport défini.

5. Raccord universel selon l'une des revendications précédentes, **caractérisé en ce que** du début du processus d'ouverture de la soupape jusqu'à l'ouverture complète du corps de la soupape (1.7), la section est dimensionnée de sorte à permettre un étranglement réglable du débit volumétrique la traversant.

6. Raccord universel selon l'une des revendications précédentes, **caractérisé en ce que** la région d'entrée de l'alésage du bottier de la soupape (1.12) est constituée derrière le filetage intérieur (1.1) du boîtier de la soupape (1.12) par un joint secondaire sous forme d'un cône (1.2), actionné en liaison avec un capot de protection.

7. Raccord universel selon l'une des revendications précédentes, **caractérisé en ce qu**'en cas de non-utilisation, la soupape est protégée par un capot de protection comportant une ou plusieurs pièces, comportant une goupille filetée (5.1) avec un cône d'étanchéité (5.9).

8. Raccord universel selon la revendication 7, **caractérisé en ce que** le capot de protection en deux pièces comporte une goupille filetée (5.1) composée de métal ou de céramique.

9. Raccord universel selon la revendication 7, **caractérisé en ce que** le capot de protection et la goupille filetée sont formés d'une seule pièce et composés entièrement de plastique.

10. Raccord universel selon la revendication 7, **caractérisé en ce que** le capot de protection comporte une goupille filetée (5.1) avec un filetage extérieur protégé (5.7).

11. Raccord universel selon la revendication 7, **caractérisé en ce que** le capot de protection comporte un hexagone (5.2) destiné à son serrage, pour faire par exemple fonction de dispositif protège-enfants.

12. Raccord universel selon l'une des revendications précédentes, **caractérisé en ce que** le dispositif d'ouverture de la soupape peut être raccordé directement ou par l'intermédiaire d'un tuyau de raccordement à un dispositif d'utilisation.

13. Raccord universel selon l'une des revendications précédentes, **caractérisé en ce que** le corps de la soupape (1.7) ayant une forme en bille ou en cône, est composé de caoutchouc, de plastique ou de céramique.

14. Raccord universel selon l'une des revendications précédentes, **caractérisé en ce que** le corps de la soupape (1.7) est supporté contre le ressort hélicoïdal (1.10) par une coupelle de ressort (1.9) composée de métal, de céramique ou de plastique, la coupelle de ressort (1.9) comportant une goupille de centrage et pouvant servir de joint de secours.

15. Raccord universel selon l'une des revendications précédentes, **caractérisé en ce que** le boîtier de la soupape (2.1) a la forme d'un corps cylindrique circulaire pouvant être inséré par pression dans des extrémités de conduites normalisées.

16. Raccord universel selon l'une des revendications 1 à 14.**caractérisé en ce que** le boîtier de la soupape (3.1) comporte sur le côté du système de conduite un filetage intérieur destiné à recevoir une pièce de raccordement, la pièce de raccordement comportant au niveau d'une extrémité un filetage extérieur et au niveau de l'autre extrémité un filetage intérieur, un filetage extérieur ou une gaine cylindrique circulaire pouvant être insérée par pression dans une extrémité de conduite.

17. Raccord universel selon l'une des revendications précédentes, **caractérisé en ce que** le dispositif d'ouverture de la soupape dans l'alésage du mandrin de raccordement comporte un capteur de température.

18. Raccord universel selon l'une des revendications précédentes, **caractérisé en ce que** le dispositif d'ouverture de la soupape est raccordé par exemple à des dispositifs d'utilisation mécaniques, électriques ou autres.
